# EUROPEAN PATENT SPECIFICATION

(11) **EP 0 406 486 B1**
(45) Date of publication and mention of the grant of the patent: **30.10.1996**
(21) Application number: 89201789.8
(22) Date of filing: 06.07.1989
(51) Int. Cl.: G08C 19/28

(54) **Control system for controlling consumer apparatus, in particular audio and/or video apparatus and consumer apparatus for use in such control system**
Steuerungssystem zur Steuerung von Konsumgeräten, insbesondere von Audio- und/oder Videogeräten, und Konsumgerät für Anwendung in solchem Steuerungssystem
Système de commande d'appareils de consommation en particulier d'appareils audio et/ou vidéo et appareil de consommation pour utilisation dans un tel système de commande

(43) Date of publication of application: 09.01.1991
(73) Proprietor: Philips Electronics N.V., 5621 BA Eindhoven (NL)
(72) Inventor: van Steenbrugge, Bernard, NL-5656 AA Eindhoven (NL)
(74) Representative: Strijland, Wilfred

(56) References cited:
- EP-A- 0 186 872
- EP-A- 0 333 269
- PROCEEDINGS OF THE INTERNATIONAL CONGRESS ON TRANSPORTATION ELECTRONICS, October 20-22 1986, pages 85-97, Publisher: SAE, Warrendale (US) HIROSHI TAJIMA et al "A Distributed Architecture Car Audio System"

## Description

The invention relates to a method of controlling interconnected consumer apparatuses, in particular audio and or video apparatuses. Various such apparatuses have been in general use and the control signals for these apparatuses nowadays have been formatted as a bit stream, for in that bit stream specifying a qualitative mode and/or quantitative operation settings.

The general trend in consumer service systems is to integrate an arbitrary selection of such apparatuses to function collectively. The interaction may be on a control level in that a first apparatus only controls the function of a second apparatus. Alternatively, also the user function may be fulfilled by the combination, for example in that one apparatus is a broadcast tuner for receiving a particular signal and that the second apparatus is a recorder to record the signal so received. In general, the various apparatuses in the system may be of various different types, even when fulfilling the same function, and may also be made by various manufacturers. Thus, in principle each apparatus could require its own particular mode or operation settings that could be expressly non-standard.

A control system applying the method depicted above has been described in European Patent Application EP-A-0 333 269 to the same assignee. EP-A-0 333 269 is state of the art under Art. 54(3) EPC. This system describes a protocol to regulate the information stream between two apparatuses in order recover from errors in reception. The system has no provisions on the level of control commands for the apparatuses.

The document in PROCEEDINGS OF THE INTERNATIONAL CONGRESS OF TRANSPORTATION ELECTRONICS, October 20-22, 1986, pages 85-97, SAE Warrendale (US), Hiroshi Tajima et al., called "A Distributed Architecture Car Audio System" shows a control system with a bus with distributed stations. It further shows a key matrix with multiple functions per key for a system incorporating a CD player. This demonstrates the need for a specific, predetermined mapping of functions on keys for a specific system set-up. The present invention offers the flexibility to incorporate any consumer apparatus, even those that are not yet existing today, because of the systematic categorization of commands and the local conversion of commands.

European Patent Application EP-A-0 186 872 shows a terminal controlling protocol, which consists of a first protocol and a second protocol. The organisation of commands (in operation code and operand codes) in the embodiment of the present invention is different in that it includes a local conversion to accommodate for an apparatus specific implementation of commands. Furthermore, new elements in the present invention is the categorisation of commands and an implementation of those categories in respective parts of the local command table in the consumer apparatuses.

Among other things, it is an object of the present invention to relieve any control command generating entity outside any apparatus so controlled from the need to expressly specify operation mode and/or operation settings for the latter apparatus. According to one of its aspects the invention thereto provides a method of controlling interconnected consumer apparatuses, the method comprising the steps of:
- sending from a command generating means to a destination apparatus a command item, containing an operation code followed by a set of command operand codes,
- receiving said command item in the destination apparatus,
- under control of the operation code accessing a local command table in the destination apparatus, said local command table containing a first address range for storing general commands and a from the first differing second address range for storing function group commands,
- based on accessed information in the local table converting the operation code or the operand codes which follow the operation code into an executable command, and
- executing the command by the destination apparatus.

The invention also relates to a destination apparatus for use in such a method and comprising:
- receiving means for receiving a command item, containing an operation code followed by a set of command operand codes,
- storage means for holding a local command table with a first address range for storing general commands and with a from the first differing second address range for storing function group commands,
- converting means for under control of the operation code accessing the local command table and converting the operation code or the operand codes which follow the operation code into an executable command, and
- execution means for executing the command..

Various advantageous aspects are recited in dependent Claims.

The invention will in particular be further explained with respect to accompanying Figures that show preferred realizations.
Figure 1 is a block diagram of an elementary system according to the invention;
Figure 2 is a diagram of a command table.

### DESCRIPTION OF A PREFERRED EMBODIMENT

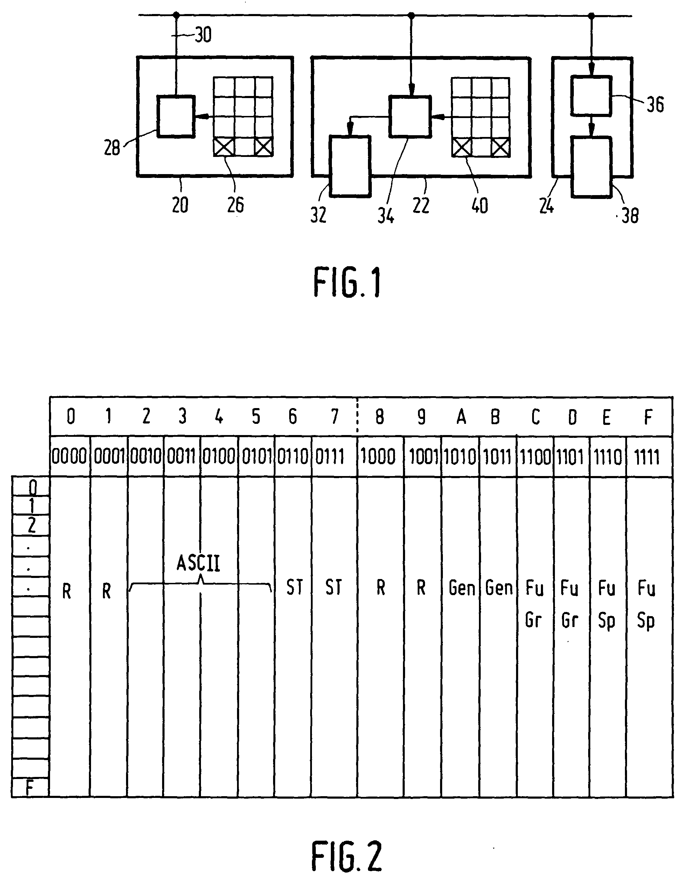

Figure 1 is a block diagram of an elementary system according to the invention. It has three apparatuses 20, 22, 24 and by way of example is projected on a audio system. Likewise it may be video, mixed audio-video or comprise other consumer functions such as lighting/environment control, food preparation or other. Block 20 is a controller-only block. It has a keyboard with 12 keys as shown; the keycode conventionally may be translated to a control byte in translator 28 that also comprises an interface to serial bus 30, to which block 20 functions as a master station. The bus definition may be according to the D²B format as specified in US patent 4,429,384 to the same assignee. Block 24 may, by means of subsystem 38 render the consumer function, such as operating as a tuner, turntable, recorder, or other. Of course, two different blocks could cooperate with respect to their consumer function, in that a first block would be a tuner, a second block a recorder or loudspeaker system. Other, and more complicated situations have been omitted for clarity. For this cooperation, the associated apparatuses will often exchange data, such as digitized audio, along high-speed links not shown. Block 24 receives from the serial bus 30 formatted operation codes and/or command operand codes, and/or data items and/or request codes. These each translate to information that is specific to apparatus block 24, preferably by translating in element 36, which thereto functions as bus interface cum command table to be specified infra. With respect to serial bus 30, block 24 in general would function as a slave station that would react to block 20's control signals.

Block 22 has both user function block 32 and keyboard 40. Element 34 functions as bus interface, comprises the command table and may with respect to bus 20 operate either as master or as slave. In principle, the system can operate in various configurations, for example as follows:
1. block 22 functions independently under local control
2. block 20 controls block 24
3. block 22 controls block 24
4. block 20 controls both blocks 22, 24
5. block 22 controls both blocks 20, 24.

The above system is given merely by way of example. The apparatuses may be different or more numerous, interaction patterns may be more complex, keyboards may be replaced by function-assigned key sets, the system as a whole may operate as a subordinate system to a higher level system, and many other variations would not render it incommensurate to the present invention.

Figure 2 is a diagram of a command table. The table may be defined as read-only memory, as a random-access read-write memory, as a combination of the two or be embodied in a software program. For accessing the table, first the apparatus is addressed, for example in that a prospective master station grabs the bus and produces a message directed to the intended slave station. Now, as shown, the table comprises 1k-(1024) entries of 1 byte each. Addressing by a most significant nibble of an address byte, shown at the top (1..F) and by a least significant nibble of an address byte, shown at left (1..F). Conventionally, nibbles have four bits. The table from left to right comprises the following columns 0,1: reserved; 2-5: ASCII character codes or controlling values or Alias; 6-7: standard operand values; 8-9: reserved; A-B: general commands; C-D: functional group commands; E-F: function specific commands. Within each column, sixteen locations are available. Generally, operands (OPR) fill the left half of the table, operation codes (OPC) fill the right half of the table.
Now, a command consists of an operation code (OPC) and a set of operand codes (OPR). An OPC has a length of one byte, and is followed by zero or one or more OPR bytes. The operand specifies the operation which is indicated by the operation code.
The operand can be:
either one out of 32 dedicated (standard) operands;
- ASCII value
- controlling value.

The OPR codes are defined as follows:

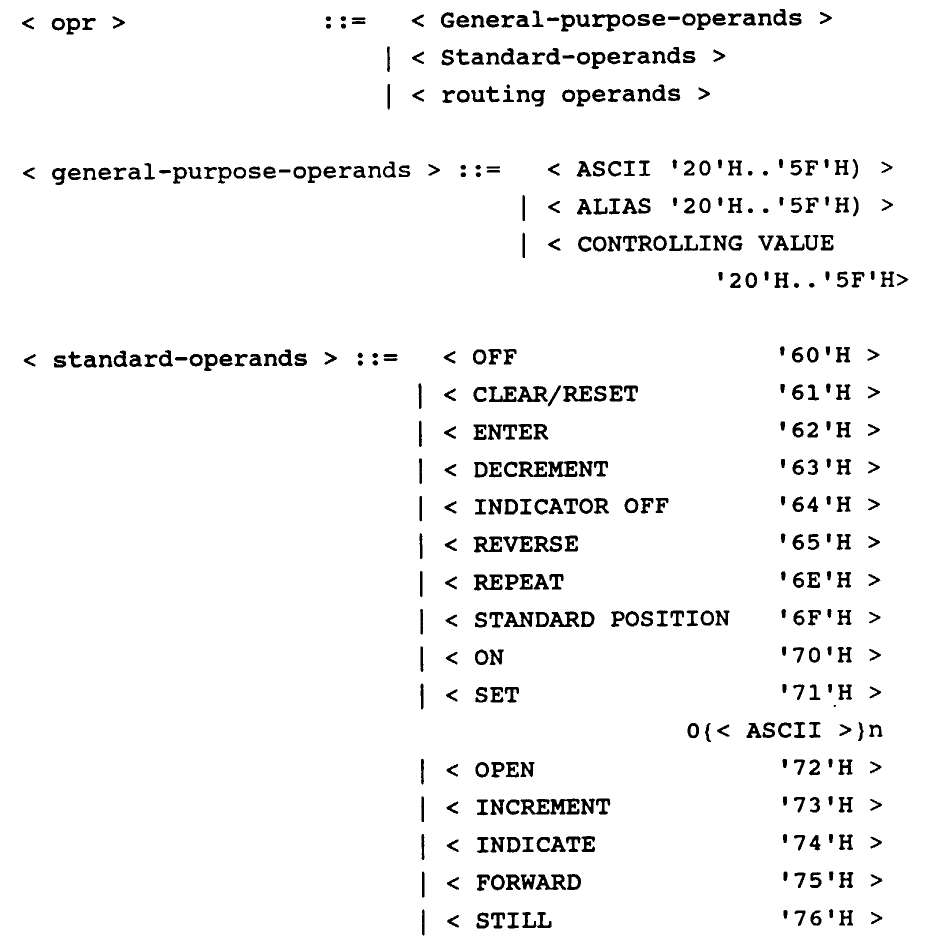

### DESCRIPTION OF THE MESSAGE STRUCTURE

The syntax of an application message is as follows: 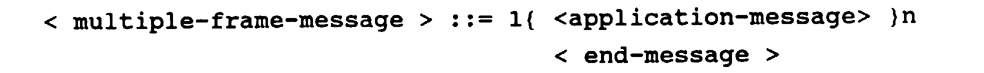 Herein, 1{..}n means a sequence of one or more items as recited between the parentheses. 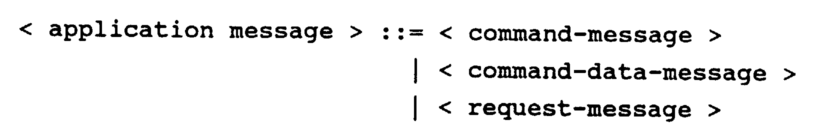 Herein, the vertical stroke means -or-, either one of the possibilities materializing. 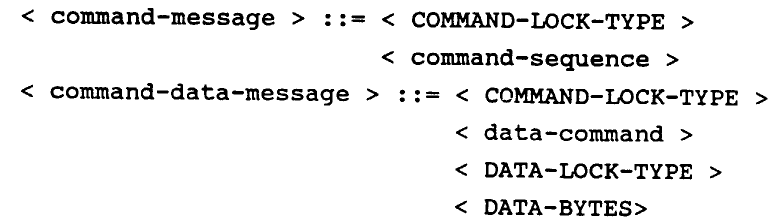 The data-commands fulfill the rules as specified for the command sequence and specify the context of the following data. 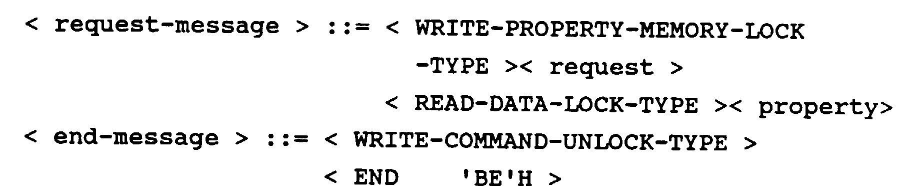 Herein, -'H- indicates a hexadecimal notation. 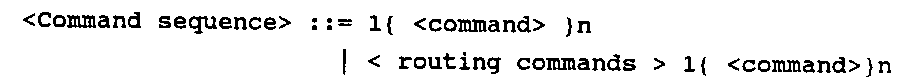 A command is a combination of an OPC and 1 or more OPR codes. The OPC is to be used as delimiter between 2 commands. The Commands are ordered in 3 groups:

General commands with same meaning for all functions.

Group Function commands with same meaning for a group of functions.

Specific Function commands with valid meaning for the specified function.

The commands are defined as follows:

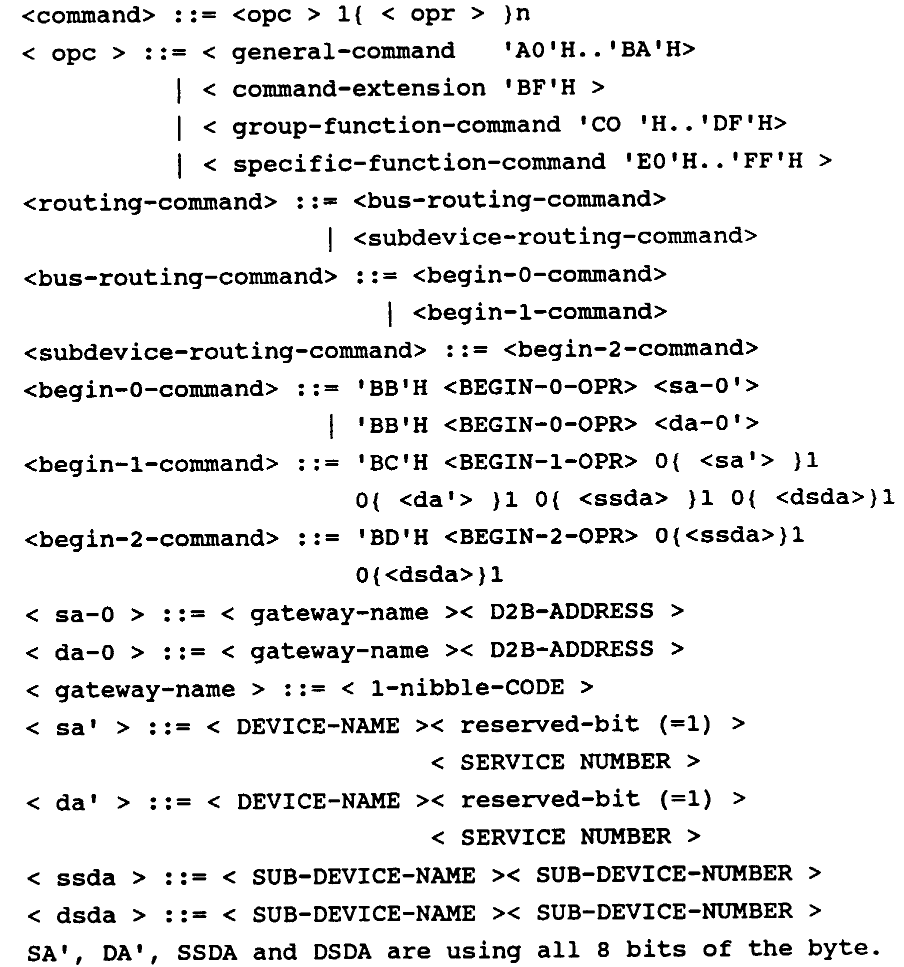

Herein a gateway-name indicates an in-bus interface that interconnects two buses having the same or different protocol specifications. In particular, -begin 1-indicates that the bus protocol at the -far-side of the interface either conforms to IHS Eureka or to the Japanese Home bus. For brevity, the associated bus protocols have not been repeated here.
-begin-2- is intended for within an apparatus specifying a subdevice, such as tuner function in a video cassette recorder.

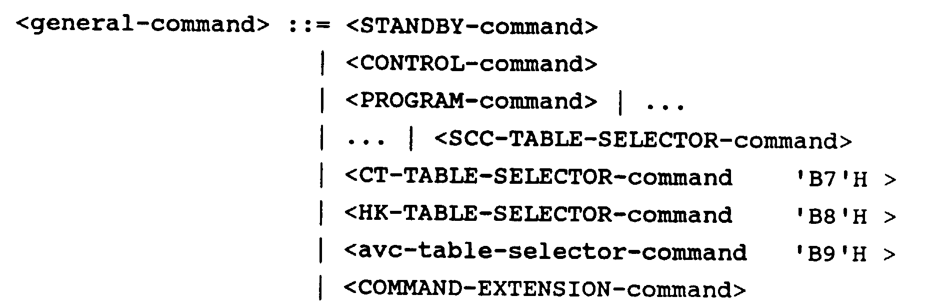

In the above, avc indicates audio-video control, CT means communication/telecom, HK means house keeping, SCC means System Common Command. Capital letters indicate that for brevity no further specification has been given, small letters indicate that such specification is to follow. Now, the System Control Commands, CT-TABLE-SELECTOR, HK-TABLE-SELECTOR and avc-table selector each select one of the group-function or specific-function commands, one table selector for each service. In case no table selector is specified, the default table for that type of destination device is used. Each apparatus has a default table for its specific apparatus category.

| Group Function commands | Specific Function commands | type of destination (sub)device |
|---|---|---|
| video commands | | video monitor |
| video commands | | video effector |
| video commands | camera commands | video camera |
| audio commands | | audio amplifier |
| audio commands | | audio effector |
| deck/player commands | | video tape recorder |
| deck/player commands | | video disk player |
| deck/player commands | | audio tape recorder |
| deck/player commands | | audio disk player |
| tuner commands | video tuner commands | video tuning system |
| tuner commands | audio tuner commands | audio tuner |
| text function commands | | teletext decoder |
| text function commands | | videotext decoder |
| | timer commands | timer |
| | User I/O commands | User I/O |
| Connection commands | Connection commands | Switch Box |

Each command, not belonging to the default table, must be specified by the table selector.

The table selected by the avc-table-selector command is effective only for the immediately following command, data or request. After execution of that following command, data or request, the default table is effective again. For example, a deck device by default would be executing deck commands. Under control of the above selector command it would execute one command received, for example, as a video command, such as a -crisp- control command. This selecting for one command only allows for restricting the necessary RAM capacity.

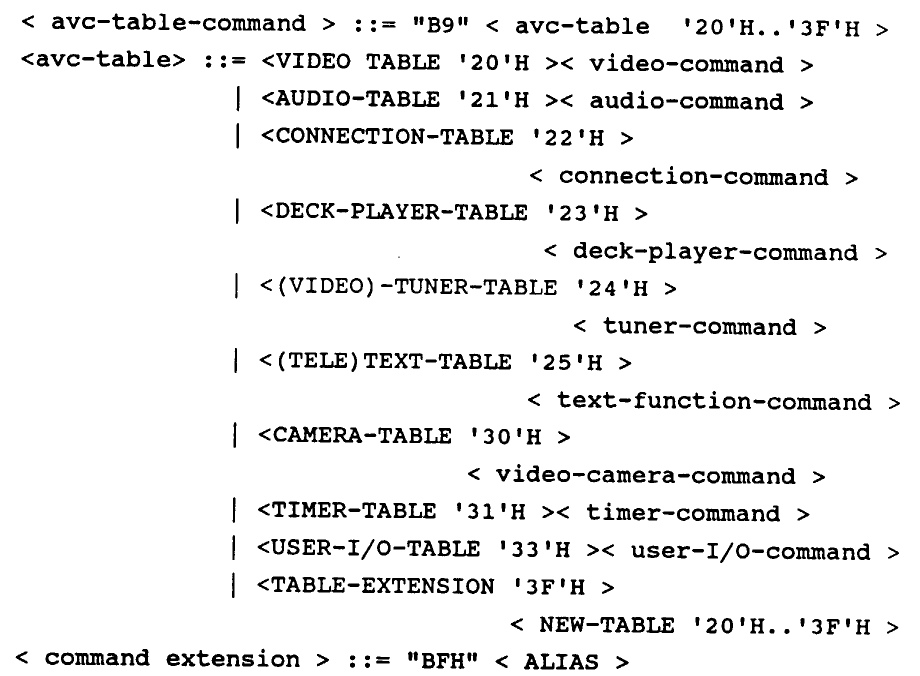

The command extension, followed by OPR, specifies an other meaning of the next command. The command extension is valid for the following command or request.

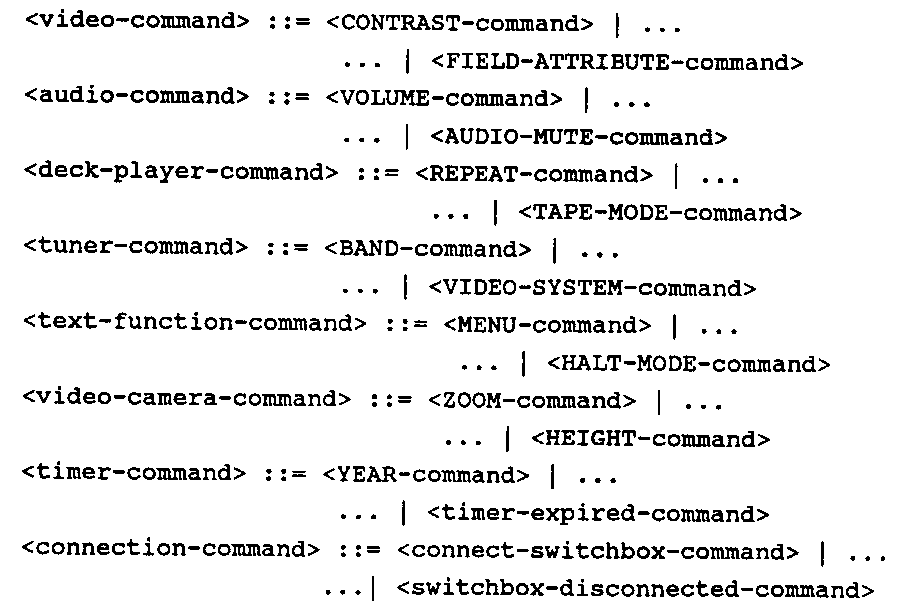

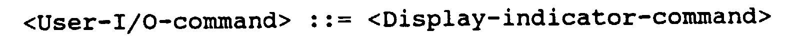

### DATA:

Bytes to be sent as data are transparant bytes. How to use or interprete this data is specified within the context of the data. This can be done by preceding commands.

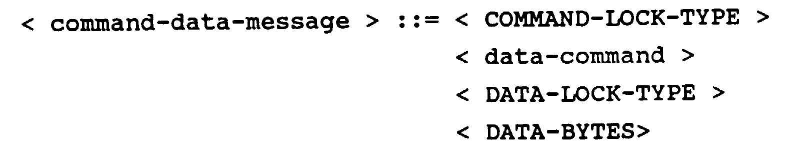

A syntax rule for the data bytes depends on the application in the receiving consumer apparatus and can be defined for each application independently. When a certain syntax is used, that syntax is specified by commands in the command-data-message.

### SYNTAX OF THE REQUESTS AND PROPERTIES:

All Static and Dynamic properties and characteristics are modeled in the property memory of a (sub)device. Such a property memory may comprise the identity of the device (such as brand, type, version, serial no.) and the status of the device (stand by, etc.) and may be a virtual memory. Each Audio/Video device shall be implemented with a property memory. Any device can have access to the property memory of a device using the request message.

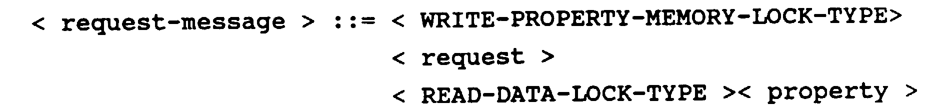

The request is terminated with the termination code "1D" to indicate that the request is completed, the slave has all information to prepare the answer. The syntax for requests is:

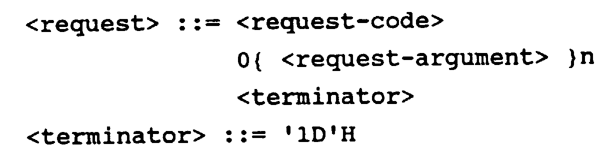

The request-code is in the range '20'H to 'FF'H. The value of the request-arguments are in the range '20'H to '7F'H. The requests are grouped to the following divisions:

### 1. Not command oriented requests:

- General requests:: General requests for a (sub)device, like request for the identity (brand name, type number) and general requests for status of a (sub)device. Requests are valid for all types of (sub)devices.
- Group requests:: Static and Dynamic requests, valid for a group of (sub)devices.
- Specific Function requests:: Static and Dynamic requests, valid for one specific function.

### 2. Command Oriented requests:

- General command oriented requests:: Dynamic Requests, related to the general commands, valid for all types of (sub)devices.
- Group requests:: Dynamic requests, related to the group function commands, valid for a group of (sub)devices.
- Specific Function requests:: Dynamic requests, related to the specific function commands, valid for one specific function.
A request can be addressed to a device or sub device (using Begin 2). A service Classification Command can be used to select an other table for a request.

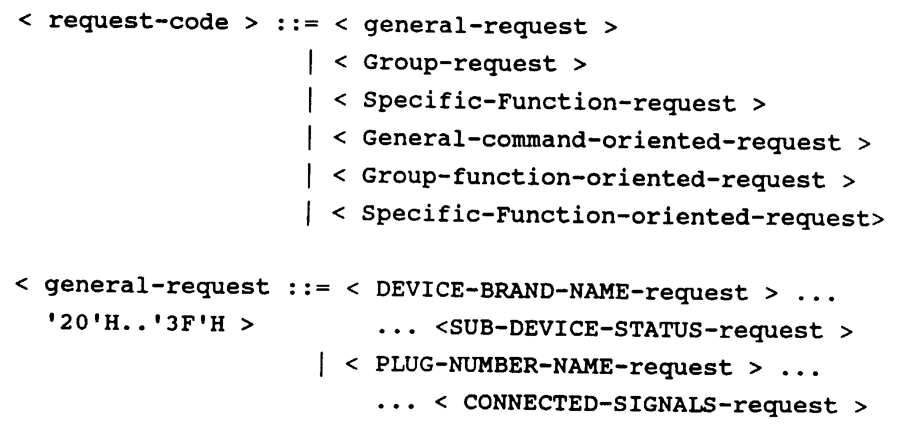

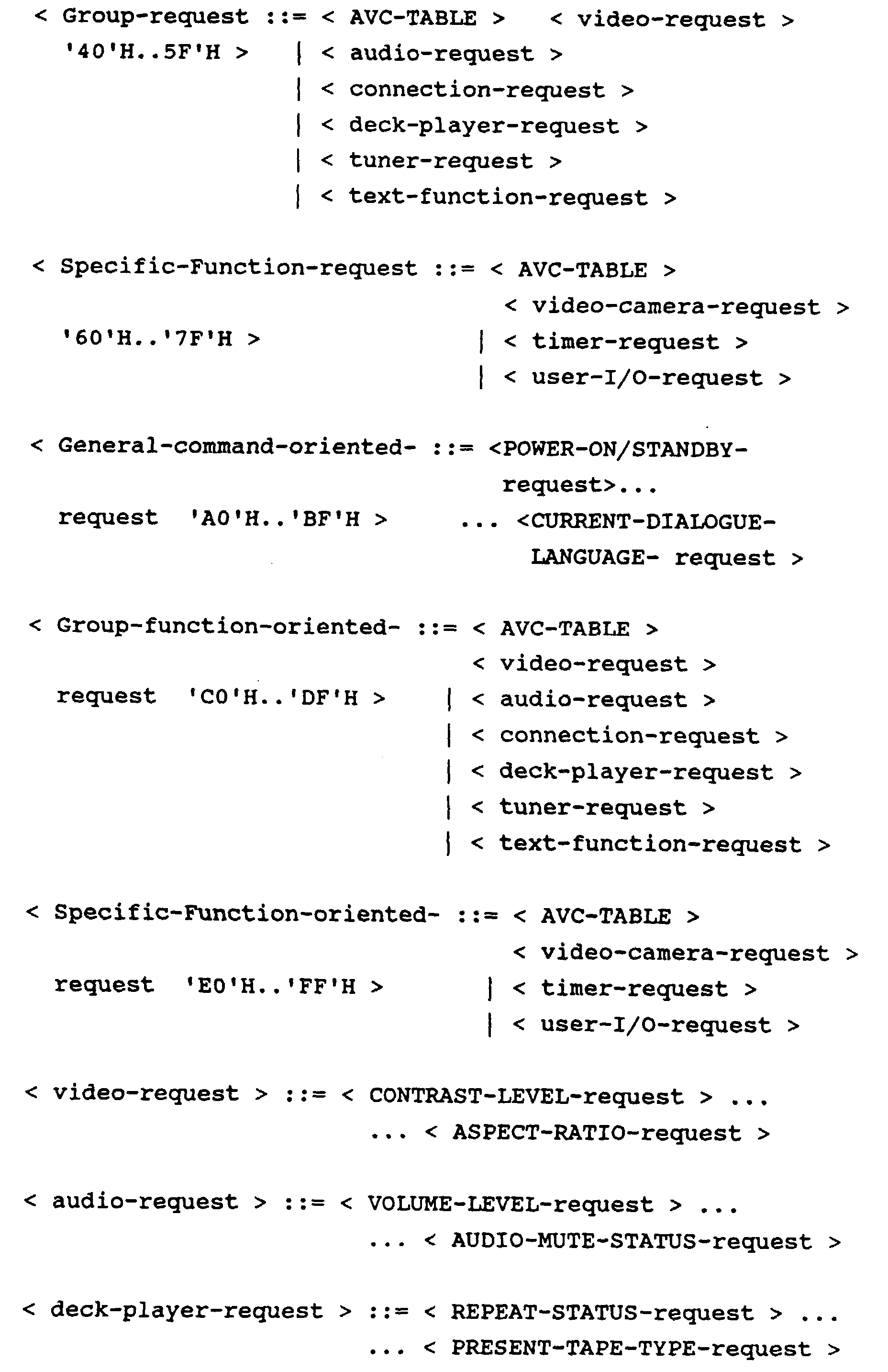

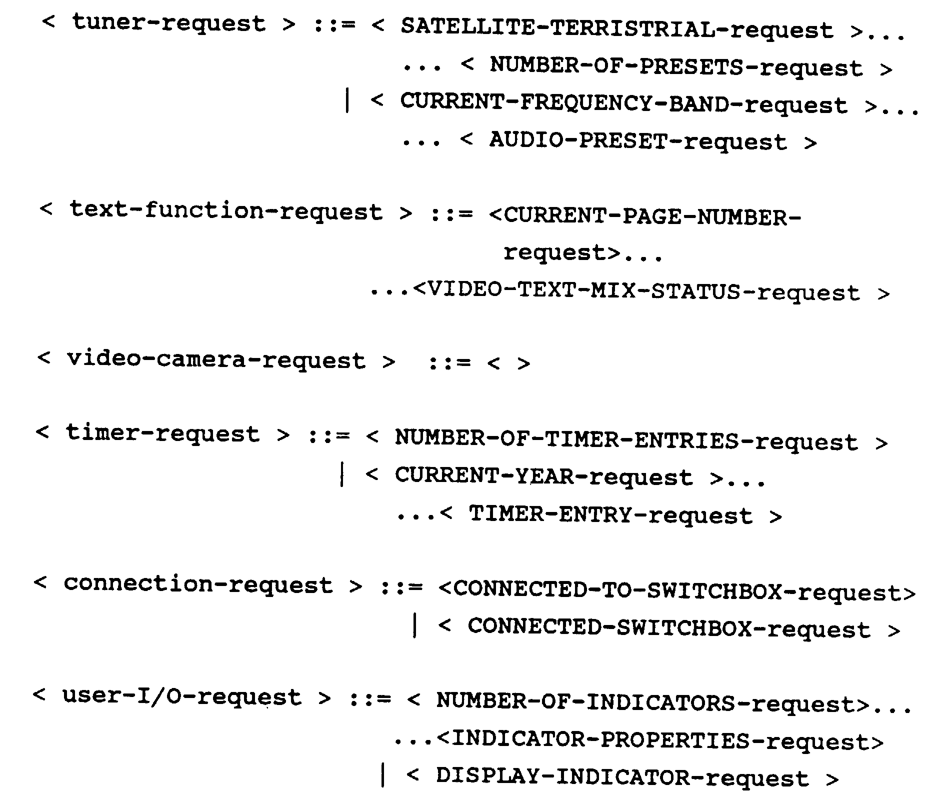

The answers must be read by the master using the 'read data' control code.
The syntax for the answers (properties) is:

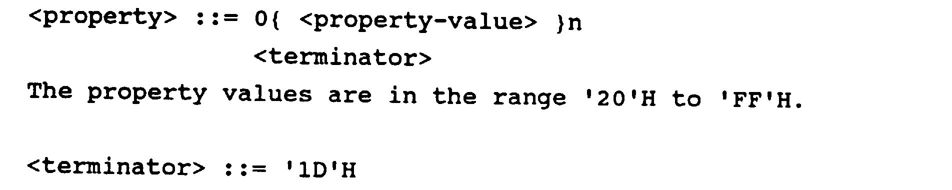

It is of great advantage that a request related to a command has an operation code, which is related to the operation code of the command. It is of further great advantage that a response to a request related to a command has an operand code, which is related to the operand code of said command. In the foregoing the expression "related" is including -identity-, which means that the same operation code and operand code(s) are used for the command and the command oriented request. Whether a request or a command is sent is determined by the control bit, which is sent in advance of the command or request.

## Claims

1. Method of controlling interconnected consumer apparatuses, the method comprising the steps of:
- sending from a command generating means to a destination apparatus a command item, containing an operation code followed by a set of command operand codes,
- receiving said command item in the destination apparatus,
- under control of the operation code accessing a local command table in the destination apparatus, said local command table containing a first address range for storing general commands and a from the first differing second address range for storing function group commands,
- based on accessed information in the local table converting the operation code or the operand codes which follow the operation code into an executable command, and
- executing the command by the destination apparatus.

2. Method according to Claim 1, comprising the step of under control of the operation code accessing the local command table in the destination apparatus, said local command table containing a third address range for storing function specific commands.

3. Method according to Claim 1, wherein any operation code is different from any operand code.

4. Method according to Claim 1, wherein the sending of command items is performed in a serial manner.

5. A destination apparatus for use in a method of controlling interconnected consumer apparatuses, the destination apparatus comprising:
- receiving means for receiving a command item, containing an operation code followed by a set of command operand codes,
- storage means for holding a local command table with a first address range for storing general commands and with a from the first differing second address range for storing function group commands,
- converting means for under control of the operation code accessing the local command table and converting the operation code or the operand codes which follow the operation code into an executable command, and
- execution means for executing the command.

6. An apparatus as claimed in Claim 5, wherein the local table comprises a third address range in which function specific commands are stored.

7. An apparatus as claimed in Claim 6, wherein at least one group is a tuner group.

8. An apparatus as claimed in Claim 6, wherein at least one group is a recorder group.

9. An apparatus as claimed in Claim 6, wherein at least one group is a turntable group.

10. An apparatus as claimed in Claim 6, wherein at least one group is a visual display device group.

11. An apparatus as claimed in Claim 5 or 6, wherein the local table comprises a fourth address range in which operands are stored.

12. An apparatus as claimed in Claim 11, wherein the fourth address range comprises a first subrange in which standard operand values are stored and a second subrange in which other operand values are stored.

13. An apparatus as claimed in any of Claims 5 to 12, having an interface for interfacing to a serial D2B bus.

14. An apparatus as claimed in any of Claims 5 to 13, having a message generating device for generating and subsequent sending of an application message string followed by an end message item to another apparatus.

15. An apparatus as claimed in Claim 14, wherein said message generating device comprises a request message generating device.

16. An apparatus as claimed in any of Claims 5 to 15, having a switch selector for under control of a selector command received selecting one of the group function or specific function command in its local command table.

17. An apparatus as claimed in Claim 16, wherein absence of said selector command activates a default table for the apparatus in question.

18. An apparatus as claimed in Claim 16 or 17, wherein said switch selector is activated only with respect to selecting a single command outside its default table and thereafter directly reverting to its default table.

19. An apparatus as claimed in any of Claims 5 to 18, characterised in, that the apparatus comprises a property memory containing data that represent apparatus characteristics, and that the property memory has means for under control of a request command received outputting a property item as specified by the latter request command received.

20. An apparatus as claimed in Claim 19, wherein said property memory is suitable for containing both static and dynamic property items.

21. An apparatus as claimed in Claim 19 or 20, wherein said property memory has various address ranges dedicated to containing property items related to general request commands and function group request commands respectively.

22. An apparatus as claimed in Claim 20, wherein said property memory has a further address range containing property items related to function specific request commands.

23. An apparatus as claimed in Claim 21, wherein the property memory is a virtual memory containing the identity of the apparatus and the status of the apparatus.

24. Method according to any of Claims 1 to 4, wherein a request related to a command has an operation code, which is related to the operation code of said command.

25. Method according to Claim 24, wherein a response to a request related to a command has an operand code, which is related to the operand code of said command.

26. Method according to any of Claims 1 to 4, wherein a command puts a destination consumer apparatus in a mode defined by said command, characterised in, that after said command transparent data are sent to said apparatus and that said apparatus processes said data using a syntax defined by said mode.

## Patentansprüche

1. Verfahren zur Steuerung miteinander verbundener Konsumentengeräte, wobei das Verfahren folgende Schritte umfaßt:
- Senden eines Kommando-Elements, das einen Operationscode enthält, dem eine Menge Kommando-Operandencodes folgt, von einem kommando-erzeugenden Mittel an ein Endbestimmungsgerät,
- Empfangen des genannten Kommando-Elements in dem Endbestimmungsgerät,
- unter Steuerung des Operationscodes Zugreifen auf eine lokale Kommando-Tabelle in dem Endbestimmungsgerät, wobei die lokale Kommando-Tabelle einen ersten Adressenbereich enthält zum Speichern allgemeiner Kommandos und einen vom ersten sich unterscheidenden zweiten Adressenbereich zum Speichern von Funktionsgruppenkommandos,
- auf Basis von angesprochener Information in der lokalen Tabelle Umsetzen des Operationscodes oder die auf den Operationscode folgenden Operandencodes in ein ausführbares Kommando und
- Ausführen des Kommandos durch das Endbestimmungsgerät.

2. Verfahren nach Anspruch 1, mit dem Schritt des Zugreifens auf die lokale Kommando-Tabelle in dem Endbestimmungsgerät unter Steuerung des Operationscodes, wobei die genannte lokale Kommando-Tabelle einen dritten Adressenbereich zum Speichern funktionsspezifischer Kommandos enthält.

3. Verfahren nach Anspruch 1, wobei ein beliebiger Operationscode sich von jedem beliebigen Operandencode unterscheidet.

4. Verfahren nach Anspruch 1, wobei das Senden von Kommando-Elementen seriell erfolgt.

5. Endbestimmungsgerät zur Verwendung in einem Verfahren zur Steuerung miteinander verbundener Konsumentengeräte, wobei das Endbestimmungsgerät folgendes umfaßt:
- Empfangsmittel zum Empfangen eines Kommando-Elements, das einen Operationscode enthält, dem eine Menge von Kommando-Operandencodes folgt,
- Speichermittel zum Halten einer lokalen Kommando-Tabelle mit einem ersten Adressenbereich zum Speichern allgemeiner Kommandos und mit einem sich von dem ersten unterscheidenden zweiten Adressenbereich zum Speichern von Funktionsgruppenkommandos,
- Umsetzungsmittel zum Zugreifen auf die lokale Kommando-Tabelle unter Steuerung des Operationscodes und Umsetzen des Operationscodes oder die auf den Operationscode folgenden Operandencodes in ein ausführbares Kommando.

6. Gerät nach Anspruch 5, wobei die lokale Tabelle einen dritten Adressenbereich umfaßt, in dem funktionsspezifische Kommandos gespeichert werden.

7. Gerät nach Anspruch 6, in dem zumindest eine Gruppe eine Tuner-Gruppe ist.

8. Gerät nach Anspruch 6, in dem zumindest eine Gruppe eine Recorder-Gruppe ist.

9. Gerät nach Anspruch 6, in dem zumindest eine Gruppe eine Plattenteller-Gruppe ist.

10. Gerät nach Anspruch 6, in dem zumindest eine Gruppe eine Bildwiedergabeeinrichtung-Gruppe ist.

11. Gerät nach Anspruch 5 oder 6, wobei die lokale Tabelle einen vierten Adressenbereich umfaßt, in dem Operanden gespeichert werden.

12. Gerät nach Anspruch 11, in dem der vierte Adressenbereich einen ersten Unterbereich umfaßt, in dem Standard-Operandenwerte gespeichert werden, und einen zweiten Unterbereich, in dem andere Operandenwerte gespeichert werden.

13. Gerät nach einem der Ansprüche 5 bis 12, mit einer Schnittstelle zum Anschluß an einenseriellenD2B-Bus.

14. Gerät nach einem der Ansprüche 5 bis 13, mit einer meldungsgenerierenden Einrichtung zum Generieren und anschließenden Senden einer Anwendungsmeldungszeichenkette, der ein Endmeldungselement folgt, an ein anderes Gerät.

15. Gerät nach Anspruch 14, wobei die genannte meldungsgenerierende Einrichtung eine anforderungsmeldungsgenerierende Einrichtung umfaßt.

16. Gerät nach einem der Ansprüche 5 bis 15, mit einem Schaltwähler, um unter der Steuerung eines empfangenen Wählerkommandos eines der Gruppenfunktions- oder ein spezielles Funktionskommando in seiner lokalen Kommando-Tabelle auszuwählen.

17. Gerät nach Anspruch 16, wobei die Abwesenheit des genannten Wählerkommandos eine Standardtabelle für das betreffende Gerät aktiviert.

18. Gerät nach Anspruch 16 oder 17, wobei der genannte Schaltwähler nur hinsichtlich des Auswählens eines einzelnen Kommandos außerhalb seiner Standardtabelle und anschließenden direkten Zurückkehrens zu seiner Standardtabelle aktiviert wird.

19. Gerät nach einem der Ansprüche 5 bis 18, dadurch gekennzeichnet, daß das Gerät einen Eigenschaftsspeicher mit Daten umfaßt, die Gerätecharakteristiken repräsentieren, und daß der Eigenschaftsspeicher Mittel hat, um unter Steuerung eines durch ein empfangenes Anforderungskommando ein Eigenschaftselement, wie in dem letzteren empfangenen Anforderungskommando spezifiziert, auszugeben.

20. Gerät nach Anspruch 19, wobei der genannte Eigenschaftsspeicher geeignet ist, sowohl statische als auch dynamische Eigenschaftselemente zu enthalten.

21. Gerät nach Anspruch 19 oder 20, wobei der genannte Eigenschaftsspeicher verschiedene Adressenbereiche hat, die bestimmt sind, Eigenschaftselemente zu enthalten, die mit allgemeinen Anforderungskommandos bzw. Funktionsanforderungskommandos zusammenhängen.

22. Gerät nach Anspruch 20, wobei der genannte Eigenschaftsspeicher einen weiteren Adressenbereich hat, der Eigenschaftselemente enthält, die mit funktionsspezifischen Anforderungskommandos zusammenhängen.

23. Gerät nach Anspruch 21, wobei der genannte Eigenschaftsspeicher ein virtueller Speicher ist, der die Identität des Geräts und den Status des Geräts enthält.

24. Verfahren nach einem der Ansprüche 1 bis 4, wobei eine mit einem Kommando zusammenhängende Anforderung einen Operationscode hat, der mit dem Operationscode des genannten Kommandos zusammenhängt.

25. Verfahren nach Anspruch 24, wobei eine Antwort auf eine mit einem Kommando zusammenhängende Anforderung einen Operandencode hat, der mit dem Operandencode des genannten Kommandos zusammenhängt.

26. Verfahren nach einem der Ansprüche 1 bis 4, wobei ein Kommando ein Endbestimmungskonsumentengerät in eine von diesem Kommando definierte Betriebsart bringt, dadurch gekennzeichnet, daß nach dem genannten Kommando transparente Daten an dieses Gerät gesendet werden und daß das genannte Gerät Daten unter Benutzung einer durch diese Betriebsart definierten Syntax verarbeitet.

## Revendications

1. Procédé de commande d'appareils grand public interconnectés, le procédé comprenant les étapes consistant à :
- envoyer d'un moyen générateur d'instructions à un appareil de destination un article d'instruction, contenant un code opération suivi d'un jeu de codes opérande d'instructions,
- recevoir ledit article d'instruction dans l'appareil de destination,
- sous le contrôle du code opération, accéder à une table locale d'instructions de l'appareil de destination, ladite table locale d'instructions contenant une première gamme d'adresses pour stocker des instructions générales et une deuxième gamme d'adresses différente de la première pour stocker des instructions de groupes de fonctions,
- sur la base des informations auxquelles on accède dans la table locale, convertir le code opération ou les codes opérande qui suivent le code opération en une instruction exécutable, et
- faire exécuter l'instruction par l'appareil de destination.

2. Procédé selon la revendication 1, comprenant l'étape qui permet d'accéder, sous le contrôle du code opération, à la table locale d'instructions de l'appareil de destination, ladite table locale d'instructions contenant une troisième gamme d'adresses pour stocker des instructions spécifiques à des fonctions.

3. Procédé selon la revendication 1, dans lequel tout code opération est différent de tout code opérande.

4. Procédé selon la revendication 1, dans lequel l'envoi d'articles d'instructions est réalisé de manière sérielle.

5. Appareil de destination susceptible d'être utilisé dans un procédé de commande d'appareils grand public interconnectés et comprenant :
- des moyens récepteurs pour recevoir un article d'instruction, comprenant un code opération suivi d'un jeu de codes opérande d'instructions,
- des moyens de stockage pour maintenir une table locale d'instructions comportant une première gamme d'adresses pour stocker des instructions générales et une deuxième gamme d'adresses différente de la première pour stocker des instructions de groupes de fonctions,
- des moyens de conversion pour accéder, sous le contrôle du code opération, à la table locale d'instructions et convertir le code opération ou les codes opérande qui suivent le code opération en une instruction exécutable, et
- des moyens d'exécution pour exécuter l'instruction.

6. Appareil selon la revendication 5, dans lequel la table locale comprend une troisième gamme d'adresses dans laquelle des instructions spécifiques à des fonctions sont stockées.

7. Appareil selon la revendication 6, dans lequel au moins un groupe est un groupe de tuner.

8. Appareil selon la revendication 6, dans lequel au moins un groupe est un groupe d'enregistreur.

9. Appareil selon la revendication 6, dans lequel au moins un groupe est un groupe de platine.

10. Appareil selon la revendication 6, dans lequel au moins un groupe est un groupe de dispositif d'affichage visuel.

11. Appareil selon la revendication 5 ou 6, dans lequel la table locale comprend une quatrième gamme d'adresses dans laquelle des opérandes sont stockés.

12. Appareil selon la revendication 11, dans lequel la quatrième gamme d'adresses comprend une première sous-gamme dans laquelle des valeurs d'opérande standards sont stockées et une deuxième sous-gamme dans laquelle d'autres valeurs d'opérande sont stockées.

13. Appareil selon l'une quelconque des revendications 5 à 12, présentant une interface avec un bus D²B sériel.

14. Appareil selon l'une quelconque des revendications 5 à 13, comportant un dispositif générateur de messages pour générer et ensuite envoyer une chaîne de messages d'application suivie d'un article de message final à un autre appareil.

15. Appareil selon la revendication 14, dans lequel ledit dispositif générateur de messages comprend un dispositif générateur de messages de demandes.

16. Appareil selon l'une quelconque des revendications 5 à 15, comportant un sélecteur pour sélectionner, sous le contrôle d'une instruction de sélecteur reçue, une instruction de fonction de groupe ou une instruction de fonction spécifique dans sa table locale d'instructions.

17. Appareil selon la revendication 16, dans lequel l'absence de ladite instruction de sélecteur active une table par défaut pour l'appareil en question.

18. Appareil selon la revendication 16 ou 17, dans lequel ledit sélecteur n'est activé que par rapport à la sélection d'une seule instruction en dehors de sa table par défaut et revient ensuite directement à sa table par défaut.

19. Appareil selon l'une quelconque des revendications 5 à 18, caractérisé en ce que l'appareil comprend une mémoire de propriétés contenant des données qui représentent les caractéristiques de l'appareil et en ce que la mémoire de propriétés a des moyens pour délivrer, sous le contrôle d'une instruction de demande reçue, un article de propriété tel que spécifié par la dernière instruction de demande reçue.

20. Appareil selon la revendication 19, dans lequel ladite mémoire de propriétés convient pour contenir à la fois des articles de propriété statiques et dynamiques.

21. Appareil selon la revendication 19 ou 20, dans lequel ladite mémoire de propriétés a diverses gammes d'adresses destinées à contenir des articles de propriétés en rapport avec des instructions de demandes générales et avec des instructions de demandes de groupes de fonctions, respectivement.

22. Appareil selon la revendication 20, dans lequel ladite mémoire de propriétés a une autre gamme d'adresses contenant des articles de propriété en rapport avec des instructions de demandes spécifiques de fonctions.

23. Appareil selon la revendication 21, dans lequel la mémoire de propriétés est une mémoire virtuelle contenant l'identité de l'appareil et l'état de l'appareil.

24. Procédé selon l'une quelconque des revendications 1 à 4, dans lequel une demande en rapport avec une instruction a un code opération qui est en rapport avec le code opération de ladite instruction.

25. Procédé selon la revendication 24, dans lequel une réponse à une demande en rapport avec une instruction a un code opérande, qui est en rapport avec le code opérande de ladite instruction.

26. Procédé selon l'une quelconque des revendications 1 à 4, dans lequel une instruction place un appareil grand public de destination dans un mode défini par ladite instruction, caractérisé en ce que, après ladite instruction, des données transparentes sont envoyées audit appareil et en ce que ledit appareil traite lesdites données en utilisant une syntaxe définie par ledit mode.
